# DEMANDE DE BREVET EUROPEEN

(11) **EP 0 525 213 A1**
(43) Date de publication de la demande: **03.02.1993**
(21) Numéro de dépôt: 91103266.2
(22) Date de dépôt: 04.03.1991
(51) Int. Cl.: F26B 7/00, F26B 21/14

(54) **Procédé de deshydratation totale ou partielle de produits végétaux, son dispositif de deshydratation et le produit obtenu**

(30) Priorité: 05.03.1990 FR 9002746
(71) Demandeur: Blaizat, Claude, F- 75020 Paris (FR)
(72) Inventeur: Blaizat, Claude, F- 75020 Paris (FR)

(57) **Abrégé**

Procédé de déshydratation totale ou partielle de produits végétaux, plus particulièrement de produits feuillus, dispositif de déshydratation et produit correspondant.

Le procédé selon l'invention est remarquable en ce qu'il consiste en plusieurs étapes : mise sous vide de l'enceinte (1) dans laquelle sont disposés les produits à déshydrater, et du dispositif d'adsorption (2) jusqu'à une pression partielle d'air dans ladite enceinte (1), comprise entre 1 et 2 mbar, remontée de la pression totale de l'enceinte (1) entre 7 et 200 mbar par introduction d'un gaz caloporteur, maintien de la pression désirée, arrêt du fonctionnement, mise à la pression atmosphérique de l'enceinte (1) et du dispositif d'adsorption (2).
Application à l'agro-alimentaire.

## Description

La présente invention concerne un procédé de déshydratation totale ou partielle de produits végétaux, le dispositif de déshydratation approprié et le produit ainsi déshydraté. Elle concerne plus particulièrement les produits feuillus agricoles ou pharmaceutiques.

Il a toujours été intéressant de déshydrater des produits végétaux. En effet, il est particulièrement agréable pour une ménagère, par exemple, d'avoir à sa disposition, quelque soit la saison, des produits feuillus quine s'altèrent pas avec le temps. Elle peut ainsi consommer ces produits après une déshydratation réalisée plus ou moins longtemps auparavant. En outre, dans le cadre de produits végétaux feuillus, l'herboriste voit également d'un grand intérêt ce type de produits car il peut les stocker et les vendre quelques semaines après leur déshydratation tout en garantissant leurs qualités médicinales à sa clientèle.

Les différentes techniques de déshydratation connues aujourd'hui consistent essentiellement en une exposition des produits feuillus au soleil ou aux infra-rouges. Si l'intérêt de cette technique est une bonne conservation des qualités gustatives des produits, elle nécessite une grande surface, des manipulations importantes puisqu'il faut étaler les produits feuillus et les retourner régulièrement, ce qui nécessite une main d'oeuvre importante.

Une autre technique de déshydratation de produits feuillus est de réaliser la déshydratation sous vide, ce qui représente des inconvénients dus à un système de technologie complexe et coûteux pour obtenir le vide dans une enceinte à déshydratation.

La présente invention a pour but de remédier à ces différents inconvénients et concerne un nouveau procédé de déshydratation de produits végétaux feuillus, à l'état de cueillette (avec branche), produits qui conservent toutes leurs qualités organoleptiques et gustatives.

Pour atteindre ce but, l'inventeur a eu l'agréable surprise de retenir le procédé décrit dans le FR 2 425 812 qui concerne un procédé pour le traitement thermique en continu de produits alimentaires qu'il a modifié et d'utiliser le dispositif décrit dans le FR 2 489 101 qui concerne notamment un dispositif de réfrigération d'un produit agricole, qu'il a également modifié.

L'invention concerne un procédé de déshydratation de produits végétaux, caractérisé en ce qu'il est réalisé à basse pression.

Ce procédé de déshydratation selon l'invention comprend les étapes suivantes :
a) introduction des produits à déshydrater dans l'enceinte à déshydratation,
b) descente de la pression partielle d'air dans l'enceinte à déshydratation et dans le dispositif d'adsorption, comportant des moyens de chauffage et de refroidissement, à une valeur comprise entre 1 et 2 mbar, la pression totale dans ladite enceinte étant supérieure à 7 mbar,
c) remontée de pression totale dans ladite enceinte entre 7 et 200 mbar par introduction d'un gaz caloporteur mis en mouvement par le compresseur dans le dispositif d'adsorption contenant un adsorbant et l'enceinte à déshydratation,
d) maintien à la pression désirée pendant une période de temps dépendant du taux de déshydratation désiré du produit à déshydrater,
e) arrêt du fonctionnement,
f) mise à la pression atmosphérique del'enceinte à déshydratation et du dispositif d'adsorption et retrait du produit déshydraté.

Avantageusement, le gaz caloporteur est introduit dans le dispositif d'adsorption et l'enceinte au moyen d'un compresseur disposé à l'extérieur dudit dispositif d'adsorption et stocké dans une bouteille.

Selon un mode particulier de réalisation de l'invention, les produits à déshydrater sont introduits dans l'enceinte à déshydratation en tant que produits en vrac, ce qui représente des gains de place et de volumes considérables, ainsi qu'une économie de manutention.

Selon un autre mode particulier de réalisation de l'invention, les produits à déshydrater sont introduits dans l'enceinte à déshydratation dans des emballages présentant de nombreuses perforations du type tissu et/ou sacs de jute.

De façon préférentielle, le gaz caloporteur est de l'hélium, mais il peut s'agir aussi de l'hydrogène ou de l'argon. Le gaz choisi est lié à la structure de la zéolithe.

Selon encore un autre mode préférentiel de réalisation de l'invention, avant arrêt de fonctionnement du dispositif, le gaz caloporteur est récupéré dans un dispositif de récupération, du type ballon gonflable ou baudruche, au moyen d'une pompe et/ou d'un compresseur, ladite pompe étant de préférence une pompe à membrane.

De façon avantageuse, on sépare les branches et les feuilles des produits végétaux feuillus après qu'ils ont subi l'ensemble des ,étapes du procédé ci-dessus décrit. Ceci est réalisé très facilement du fait que les produits sont secs. La séparation peut se faire, par exemple, par simple courant d'air mais d'autres techniques connues peuvent être utilisées.

Selon l'invention, il est proposé en complément du procédé de déshydratation ci-dessus décrit un dispositif de déshydratation pour la mise en oeuvre de ce procédé.

Le dispositif de mise en oeuvre du procédé ci-dessus décrit, comportant une enceinte à déshydratation destinée à recevoir les produits à déshydrater, à laquelle sont éventuellement associés des moyens pour faire le vide dans cette enceinte et un dispositif d'adsorption comportant des moyens de chauffage et de refroidissement, est caractérisé en ce que l'enceinte et le dispositif d'adsorption sont directement reliés l'un à l'autre au moyen d'une canalisation permettant d'envoyer le gaz caloporteur sec du dispositif d'adsorption à l'enceinte et, au moyen d'une autre canalisation, comportant un compresseur permettant au gaz caloporteur, humidifié lors de son passage dans l'enceinte, de retourner dans le dispositif d'adsorption.

Préférentiellement, le dispositif de chauffage contient un adsorbant qui est de la zéolithe, conformément au réacteur à zéolithe décrit dans le brevet FR 2 489 101.

La présente invention présente ainsi l'avantage d'une mise en oeuvre aisée du procédé de déshydratation, peu coûteuse puisque le dispositif est associé à un dispositif à base de zéolithe, donc peu consommateur d'énergie. Cette mise en oeuvre ne nécessite pas un personnel nombreux puisque le procédé fonctionne en automatique et continu.

La présente invention concerne aussi le produit déshydraté au moyen du procédé de déshydratation et du dispositif de déshydratation ci-dessus décrits.

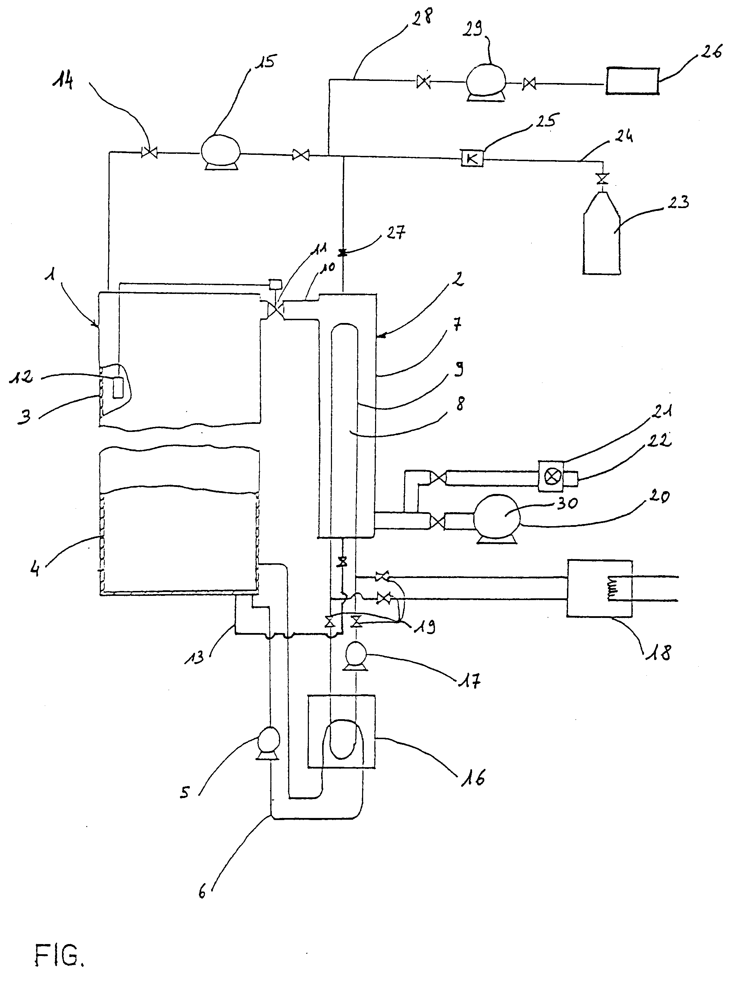

Les autres caractéristiques et avantages de l'invention résulteront de la description qui suit en référence à la figure annexée qui est une vue très schématique d'une forme d'exécution non limitative d'un dispositif selon l'invention, représentant les différents appareils.

L'invention s'applique aux produits végétaux, plus particulièrement aux feuillus, contenant initialement de l'eau, et n'est absolument pas préjudiciable à leurs qualités susbtantielles.

Le procédé est mis en oeuvre dans un dispositif de déshydratation comportant une enceinte 1 dans laquelle sont introduits les produits feuillus à déshydrater, en vrac ou dans des sacs en toile, un dispositif d'adsorption 2, comportant des moyens de chauffage ou de refroidissement, extérieur à l'enceinte 1 et de nombreux moyens techniques permettant de réaliser les différentes étapes du procédé de déshydratation.

L'enceinte 1 est constituée d'un bâti 3 étanche, de moyens d'introduction et d'évacuation des produits feuillus végétaux à déshydrater, moyens étanches, de moyens de visualisation, contrôle, sécurité des produits parés contenus dans l'enceinte 1. Ils ne sont pas représentés sur la figure.

L'intérieur de l'enceinte 1 ne comporte aucun élément de structure technologique. Les produits végétaux y sont disposés en vrac ou dans des sacs en toile. Les parois extérieure et intérieure de l'enceinte forment une cavité 4 qui est parcourue par un fluide destiné à la chauffer. Ce fluide est de l'eau. Son introduction dans la paroi extérieure de l'enceinte 1 est facilitée au moyen d'une pompe de circulation 5 et par la canalisation 6.

Le dispositif d'adsorption 2 est constitué d'une cartouche 7 étanche dans laquelle est placé un adsorbant 8 représenté schématiquement. Ce dispositif d'adsorption 2, ou dispositif de chauffage puisqu'il remplit surtout la fonction de chauffage, est indépendant et extérieur à l'enceinte 1.

L'adsorbant 8 peut être un corps de préférence solide dont le rôle est d'adsorber la vapeur d'eau des produits parés. L'adsorbant 8 peut être régénéré par extraction de la vapeur d'eau adsorbée par lui-même. Il s'agit de préférence de zéolithes. Un circuit de fluide 9 véhiculant un fluide chaud, de préférence de l'huile, est disposé dans la cartouche 7.

L'enceinte 1 est reliée au dispositif d'adsorption 2 au moyen d'une tubulure 10 qui peut être constituée de plusieurs raccords, non représentée sur la figure. Sur cette tubulure 10 est disposée une vanne 11, présentant un rôle d'arrêt et de réglage. Lorsqu'elle joue le rôle de réglage, elle est associée à une mesure de pression totale 12 de l'enceinte 1 permettant ainsi d'entretenir dans l'enceinte 1 une pression totale différente de celle dans la cartouche 7. Elle est de préférence à commande automatique mais peut être aussi commandée manuellement.

Ils sont également reliés au niveau de leur partie inférieure respective par une autre canalisation 13 destinée à permettre le passage du gaz caloporteur sec du dispositif d'adsorption 2 à l'enceinte 1.

Une troisième liaison entre l'enceinte 1 et le dispositif d'adsorption 2 est formée par une canalisation 14, comportant un compresseur 15, qui est destinée au passage du gaz caloporteur humide.

Le dispositif d'adsorption 2 comprend un circuit de fluide 9, de préférence de l'huile, qui n'est pas relié directement au circuit de la canalisation d'eau 6. Lors du fonctionnement du dispositif, l'huile du circuit 9 est chaude, ce qui permet de chauffer, par l'intermédiaire d'un échangeur à paroi 16, l'eau de la canalisation 6. L'huile chaude va donc chauffer l'eau par simple échange thermique. L'huile circule dans le circuit 9 grâce à une pompe de circulation 17 permettant d'assurer soit la circulation d'huile chaude provenant de la chaudière 18, soit le refroidissement de l'huile chaude grâce au jeu de vannes 19.

L'enceinte 1 est reliée à des moyens de dépression 20 comportant une pompe à vide 30, des moyens d'extraction 21 et des moyens de stockage 22 par un système de canalisations et de vannes, et par l'intermédiaire de la cartouche 7. Ces spécificités techniques sont décrites de façon précise dans le brevet FR 2 489 101.

Le gaz caloporteur utilisé est stocké dans une bouteille 23 pressurisée à basse pression. Il est introduit dans le dispositif d'adsorption 2 à son niveau supérieur par une canalisation 24 comportant un détendeur 25.

Il est possible de récupérer le gaz caloporteur à la fin du fonctionnement dans un ballon 26. Le clapet 25 étant fermé, ainsi que la vanne 27, le gaz caloporteur se dirige dans la tubulure 28, comportant une pompe de circulation 29, jusqu'au ballon 26.

Le dispositif qui vient d'être décrit ci-dessus fonctionne de la manière suivante :

On introduit les produits en vrac ou dans-des sacs de jute dans l'enceinte à déshydratation 1. On ferme l'enceinte 1 de façon hermétique. On descend la pression dans l'enceinte 1 et dans le dispositif d'adsorption 2 jusqu'à ce qu'on atteigne une pression partielle de l'ordre de 1 à 2 mbar (la pression totale étant de l'ordre de 7 mbar) au moyen de la pompe à vide 30. La mesure de la pression totale 12 de l'enceinte 1, permettant de connaître la pression totale de l'enceinte 1, agit sur la vanne 11. La vanne 11 régule la pression totale de l'enceinte 1 autour du point de consigne qui est fonction de la température qu'on veut obtenir sur le produit. La vanne 11 est ouverte lorsque la pression totale désirée dans l'enceinte 1 n'est pas atteinte et, inversement, elle est fermée lorsque la pression totale désirée est dépassée. On maintient la même pression totale dans l'enceinte 1. On ferme ensuite la pompe à vide 30 et la vanne 11. On injecte alors du gaz caloporteur dans ledit dispositif d'adsorption 2, en ouvrant le clapet 25 et la vanne 27 jusqu'à ce qu'on obtienne dans l'enceinte 1 une pression totale comprise entre 7 et 200 mbar, suivant la température qu'on souhaite atteindre au niveau des produits. Le circuit d'huile 9 est chauffé par l'intermédiaire de la chaudière 18. Ainsi, il va chauffer l'adsorbant 8, par exemple de la zéolithe, et l'hélium. L'hélium va alors circuler du dispositif d'adsorption 2 à l'enceinte 1 par la canalisation 13. Il va sécher les produits feuillus ; une fois chargé d'humidité, il est évacué de l'enceinte 1 par la canalisation 14 et le compresseur 15 dans le dispositif d'adsorption 2 dans lequel il va être séché et chauffé au contact de l'adsorbant 8, lui-même en contact avec le circuit d'huile 9. Le chauffage est alors arrêté. La chaleur excédentaire produite dans l'adsorbant 8 est retirée par ce même circuit d'huile 9.

En même temps que l'hélium est introduit dans le dispositif d'adsorption 2, le circuit d'huile 9 va chauffer la canalisation d'eau 6 par l'intermédiaire de l'échangeur à paroi 16. Le circuit d'huile 9 et le circuit d'eau 6 sont indépendants l'un de l'autre. L'eau chauffée permet de chauffer la cavité 4 de l'enceinte 1.

Lorsque la déshydratation est terminée, l'hélium peut être récupéré dans le ballon 26 ; le clapet 25 et la vanne 27 étant fermés, l'hélium se dirige par la canalisation 28 et la pompe 29 dans le ballon 26.

Une fois cette opération terminée, l'enceinte 1 et le dispositif d'adsorption 2 sont remis à la pression atmosphérique de manière à pouvoir ouvrir ladite enceinte 1 et récupérer les produits feuillus déshydratés.

L'intérêt de ce procédé de déshydratation est évident puisqu'il permet de déshydrater des produits feuillus rapidement dans un volume étroit et évite ainsi une manutention considérable, tout en permettant des économies d'énergie.

Cet exemple de réalisation de l'invention n'est pas limitatif.

Des exemples de déshydratation ont été réalisés à l'aide du procédé et du dispositif ci-dessus décrits. La régulation des pressions ne sera pas décrite de manière détaillée dans les exemples.

### Exemple 1

On ramasse la menthe cultivée dans un champ, qu'on range et introduit dans des sacs de jute. La menthe n'est pas tassée dans lesdits sacs. Chacun de ces sacs contient environ 5 kg de menthe fraîche.

On introduit ensuite cinq de ces sacs dans'l'enceinte à déshydratation 1. Le réacteur à zéolithe (ou dispositif d'adsorption 2) a été préalablement régénéré et contient 120 kg de zéolithe présentant un diamètre de 4 Å.

On descend la pression totale dans l'enceinte 1 à environ 7 mbar, puis on la remonte jusqu'à 100 mbar par injection d'hélium dans le dispositif d'adsorption 2 et dans l'enceinte à déshydratation 1.

On maintient la pression totale dans l'enceinte 1 par action sur la vanne 11. La zéolithe commence à adsorber, c'est-à-dire à chauffer, lorsque la température dans l'enceinte 1 atteint 60°C. Cette montée en température est également maintenue par le circuit d'huile 9 et par le circuit d'eau 6. La pompe de circulation 15 a un débit de 2. 000 m³/h.

La déshydratation est arrêtée après 6 heures de fonctionnement du dispositif à déshydratation.

La menthe déshydratée présente une humidité résiduelle de 6% et a conservé ses arômes et sa couleur verte. Les feuilles sont détachables des tiges par simple courant d'air sur la menthe.

### Exemple 2

On dénoyaute 25 kg de prunes qu'on dispose dans des claies de manière à former 2 à 3 couches de prunes. On introduit ensuite lesdites claies contenant les prunes dans l'enceinte 1.

On descend la pression totale de l'enceinte 1 environ 7 mbar, de façon à monter la température de la zéolithe jusqu'à 110-120°C. On remonte la pression totale de l'enceinte 1 à environ 100 mbar par injection à l'hélium.

La pompe de circulation 15 a un débit de 2.000 m³/h et fonctionne pendant 15 mn. Les prunes atteignent alors une température de 80°C.

La température des prunes est ramenée ensuite à 60°C au bout de 60 mn ; le chauffage est maintenu grâce au circuit d'huile 9 et au circuit d'eau 6.

La circulation d'hélium est maintenue pendant 5 heures. La déshydratation est ensuite arrêtée.

Les prunes déshydratées présentent une humidité résiduelle de 23%,

## Revendications

1. Procédé de deshydratation totale ou partielle appliqué aux produits végétaux feuillus caractérisé en ce qu'il comprend les étapes suivantes:
a/ introduction des produits à deshydrater dans l'enceinte à deshydratation (1),
b/ descente de la pression partielle d'air dans l'enceinte à deshydratation (1) et dans le dispositif d'adsorption (2) comportant des moyens de chauffage et de refroidissement interne, à une valeur comprise entre 1 et 2 mbar, la pression totale dans ladite enceinte (1) étant supérieure à 7 mbar,
c/ remontée de la pression totale dans ladite enceinte (1) entre 7 et 200 mbar par introduction d'un gaz caloporteur mis en mouvement par le compresseur (15) dans le dispositif d'adsortion (2) contenant un adsorbant (8) et l'enceinte de deshydratation (1),
d/ maintien à la pression et température désirées pendant une période de temps dépendant du taux de déshydratation désiré du produit à deshydrater,
e/ arrêt du fonctionnement,
f/ mise à la pression atmosphérique de l'enceinte à deshydratation (1) et retrait du produit deshydraté,
g/ séparation des feuilles des tiges par simple agitation dans un courant d'air sec.

2. Procédé de deshydratation selon la revendication 1 caractérisé en ce que le gaz caloporteur est introduit dans le dispositif d'adsortion (2) et l'enceinte (1) au moyen d'un compresseur (15) disposé à l'extérieur dudit dispositif d'adsortion (2) et est stocké dans une bouteille (23).

3. Procédé de deshydratation selon l'une des revendications 1 à 2, caractérisé en ce que le gaz caloporteur est de l'hélium, de l'hydrogène, de l'argon ou un mélange de deux de ces trois gaz.

4. Procédé de deshydratation selon l'une quelconque des revendications précédentes, caractérisé en ce que les produits à deshydrater sont introduits dans l'enceinte à deshydratation (1) en tant que produits en vrac.

5. Procédé de deshydratation selon l'une quelconque des revendications ,précédentes, caractérisé en ce que les produits à deshydrater sont introduits dans l'enceinte à deshydratation (1) dans dés emballages présentant de nombreuses perforations du type tissu et/ou sac de jute.

6. Procédé de deshydratation selon l'une quelconque des revendications précédentes, caractérisé en ce que, avant arrêt du procédé, le gaz caloporteur est récupéré dans un dispositif de récupération (26), du type ballon gonflable ou baudruche, au moyen d'une pompe (29).

7. Dispositif de mise en oeuvre du procédé selon l'une des revendications 1 à 6, comportant une enceinte de deshydratation (1) destinée à recevoir les produits à deshydrater, a laquelle sont associés des moyens pour faire le vide, dont la pression limite est inférieure à 1 mbar, dans cette enceinte (1) ainsi que dans le dispositif d'adsortion (2)comportant des moyens internes de chauffage et de refroidissement, caractérisé en ce que l'enceinte (1) et le dispositif d'adsorption (2) sont directement reliés l'un à l'autre au moyen d'une canalisation (13) permettant d'envoyer le gaz caloporteur sec et à température controlée du dispositif d'adsoption (2) à l'enceinte (1) et, au moyen d'une autre canalisation (14) comportant un compresseur (15) permettant au gaz coloporteur, humidifié et refroidi lors de son passage dans l'enceinte (1) de retourner dans le dispositif d'adsorption (2).

8. Dispositif selon la revendication 7, caractérisé en ce que le dispositif d'adsortion (2) contient un adsorbant (8) qui est une zéolithe dont le diamètre des pores est choisi entre 3 et 6 Angström.

9. Produit feuillu deshydraté caractérisé en ce que il est obtenu à partir du procédé de deshydratation selon l'une quelconque des revendications 1 à 6 et au moyen du dispositif de deshydratation selon l'une des revendications 7 et 8.
